# EUROPEAN PATENT APPLICATION

(11) **EP 3 979 513 A1**
(43) Date of publication of application: **06.04.2022**
(21) Application number: 19939798.5
(22) Date of filing: 26.07.2019
(51) Int. Cl.: H04B 7/06

(54) **INFORMATION PROCESSING METHOD, NETWORK DEVICE AND USER EQUIPMENT**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: Taor, Simon Edward William
(86) International application number: PCT/CN2019/098035
(87) International publication number: WO 2021/016770

(57) **Abstract**

An information processing method, a user equipment (UE), a network device, a chip, a computer-readable storage medium, a computer program product, and a computer program. The method comprises: transmitting a target information indication, the indication means of the target information indication being: a first type of target information indication means or a second type of target information indication means.

## Description

### BACKGROUND OF THE DISCLOSURE

### 1. Field of the Disclosure

The present invention relates to an information processing technology, and more particularly to an information processing method, a network device, a user equipment (UE), a chip, a computer readable storage medium, a computer program product and a computer program.

### 2. Description of the Related Art

For channel state information acquisition and feedback plans, a fundamental model and a pre-configured feedback parameter set are relied on in a wireless communication system for carrying out determination and feedback on the channel-state information (target information). However, this type of feedback method has a relatively large deviation between feedback information of the target information and real information. Artificial Intelligence (AI) is proposed in some studies to make up this deficiency. However, how to provide a corresponding service type for a user equipment (UE) to improve user experience and overall network performance is also a problem needed to be studied and solved.

### SUMMARY

To solve above technical problems, embodiments of the present invention provide an information processing method, a network device, a user equipment (UE), a chip, a computer readable storage medium, a computer program product and a computer program.

In a first aspect, provided is an information processing method, applied to a UE, the method including:
sending a target information indication,
wherein an indication way to indicate the target information indication is a first type of target information indication way or a second type of target information indication way.

In a second aspect, provided is an information processing method, applied to a network device, the method including:
receiving a target information indication, wherein an indication way to indicate the target information indication is a first type of target information indication way or a second type of target information indication way; and
obtaining target information from the target information indication by utilizing an obtaining way corresponding to the first type of target information indication way or by utilizing an obtaining way corresponding to the second type of target information indication way.

In a third aspect, provided is a UE, including:
a first communication unit, for sending a target information indication,
wherein an indication way to indicate the target information indication is a first type of target information indication way or a second type of target information indication way.

In a fourth aspect, provided is a network device, including:
a second communication unit, for receiving a target information indication, wherein an indication way to indicate the target information indication is a first type of target information indication way or a second type of target information indication way; and
a second processing unit, for obtaining target information from the target information indication by utilizing an obtaining way corresponding to the first type of target information indication way or by utilizing an obtaining way corresponding to the second type of target information indication way.

In a fifth aspect, provided is a UE, which includes a processor and a memory. The memory is configured to store a computer program, and the processor is configured to call and run the computer program stored in the memory to implement the method of the first aspect or the method of any implementation of the first aspect.

In a sixth aspect, provided is a network device, which includes a processor and a memory. The memory is configured to store a computer program, and the processor is configured to call and run the computer program stored in the memory to implement the method of the second aspect or the method of any implementation of the second aspect.

In a seventh aspect, provided is a chip, configured to implement the method of any of the foregoing implementations.

Specifically, the chip includes a processor configured to call and run a computer program stored in a memory to enable an apparatus with the chip installed to execute the method of any of the first aspect to the second aspect or implement the method of any implementation of any of the first aspect to the second aspect.

In an eighth aspect, provided is a computer readable storage medium, which is configured to store a computer program, which enables a computer to execute the method of any of the first aspect to the second aspect or execute the method of any implementation of any of the first aspect to the second aspect.

In a ninth aspect, provided is a computer program product, which includes computer program instructions enabling a computer to execute the method of any of the first aspect to the second aspect or execute the method of any implementation of any of the first aspect to the second aspect.

In a tenth aspect, provided is a computer program, when running on a computer, enabling the computer to execute the method of any of the first aspect to the second aspect or execute the method of any implementation of any of the first aspect to the second aspect.

By utilizing above solutions, the target information indication can be sent by means of the first type of target information indication way or the second type of target information indication way. In this way, it can provide corresponding channel state information indication ways for different types of devices and different environmental scenarios, thereby improving user experience and overall network performance.

### BRIEF DESCRIPTION OF THE DRAWINGS

FIG. 1 is a first schematic diagram illustrating a communication system framework provided in an embodiment of the present application.
FIG. 2 is a first schematic flowchart of an information processing method provided in an embodiment of the present invention.
FIG. 3 is a second schematic flowchart of an information processing method provided in an embodiment of the present invention.
FIGs. 4 to 7 are schematic diagrams illustrating AI-based scenarios.
FIGs. 8 to 12 are schematic flowcharts of a plurality of processing methods provided in embodiments of the present invention.
FIG. 13 is a schematic diagram illustrating the structure of a UE provided in an embodiment of the present invention.
FIG. 14 is a schematic diagram illustrating the structure of a network device provided in an embodiment of the present invention.
FIG. 15 is a schematic diagram illustrating the structure of a communication device provided in an embodiment of the present invention.
FIG. 16 is a schematic block diagram illustrating a chip provided in an embodiment of the present application.
FIG. 17 is a second schematic diagram illustrating a communication system framework provided in an embodiment of the present application.

### DETAILED DESCRIPTION OF THE EMBODIMENTS

To provide a more detailed understanding of features and technical content of embodiments of the present invention, the implementation of the embodiments of the present invention is described below in detail in conjunction with the drawings. The drawings are provided for reference only and are not intended to limit the embodiments of the present invention.

The technical solutions in the embodiments of the present application are described below with reference to appending drawings of the embodiments of the present application. Obviously, the described embodiments are a part of embodiments of the present application but are not all of the embodiments. Based on the embodiments of the present application, all the other embodiments obtained by those of ordinary skill in the art without making any inventive effort are within the scope sought to be protected in the present application.

The solutions of the embodiments of the present application may be applied to various communication systems, such as, a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a universal mobile telecommunications system (UMTS), a Worldwide Interoperability for Microwave Access (WiMAX) communication system or a 5G system, etc.

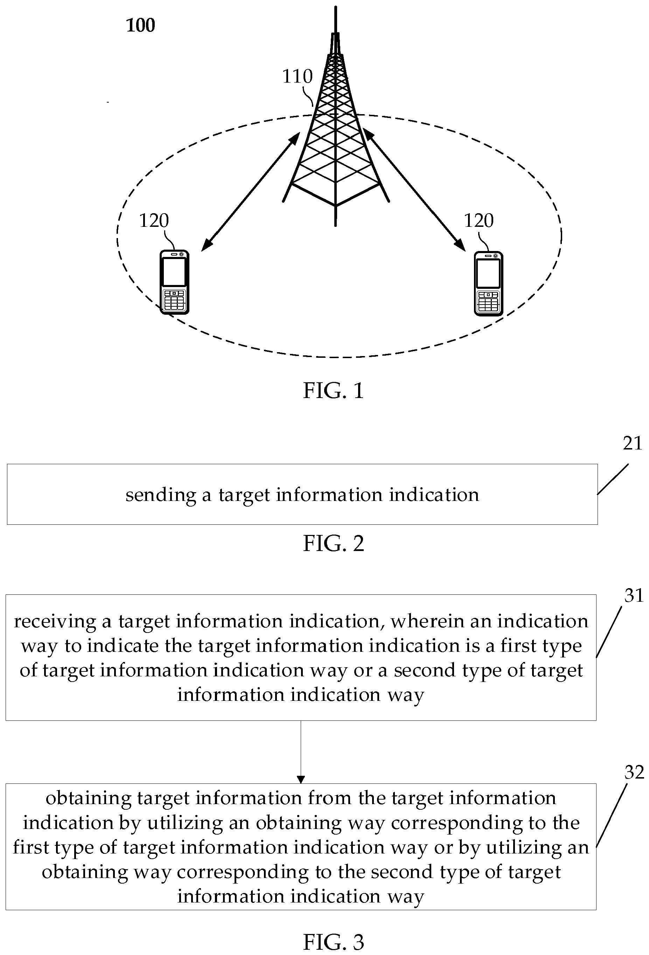

Exemplarily, a communication system 100 applied according to an embodiment of the present application is illustrated in FIG. 1. The communication system 100 may include a network device 110, and the network device 110 may be a device communicating with a terminal device 120 (or called a communication terminal or a terminal). The network device 110 may provide communication coverage for a specific geographical region and may communicate with a UE within the coverage. Optionally, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Alternatively, the network device may be a mobile switching center, a relay station, an access point, a vehicle device, a wearable device, a hub, a switch, a network bridge, a router, a network-side device in a 5G network, a network device in a future evolved Public Land Mobile Network (PLMN) or the like.

The communication system 100 further includes at least one UE 120 located within the coverage of the network device 110. A "UE" used herein includes, but not limited to, a device connected through a wired line connection, for example, through Public Switched Telephone Network (PSTN), Digital Subscriber Line (DSL), digital cable or direct cable; and/or a device connected with another data link/network; and/or a device connected through a wireless interface, for example, a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter; and/or a device configured by another UE to receive/send a communication signal; and/or an Internet of Things (IoT) device. A UE configured to communicate by a wireless interface may be called a "wireless communication terminal", a "wireless terminal" or a "mobile terminal".

Optionally, device to device (D2D) communication may be performed between UEs 120.

It is to be understood that the terms "system" and "network" in this article may usually be exchanged in the application. In the application, the term "and/or" is only a kind of association for describing related objects and, which means that there can be three kinds of relationships, for example, A and/or B may represent three conditions, i.e., independent existence of A, existence of both A and B and independent existence of B. In addition, the character "/" in this article generally represents that previous and next associated objects form an "or" relationship.

To provide a more detailed understanding of features and technical content of embodiments of the present invention, the implementation of the embodiments of the present invention is described below in detail in conjunction with the drawings. The drawings are provided for reference only and are not intended to limit the embodiments of the present invention.

An embodiment of the present invention provides an information processing method, which is applied to a UE. As shown in FIG. 2, the method includes the followings:

In Step 21, a target information indication is sent.

wherein an indication way to indicate the target information indication is a first type of target information indication way or a second type of target information indication way.

Correspondingly, at a network device side, the information processing method provided in the present embodiment includes the followings when being applied to the network device, as shown in FIG. 3.

In Step 31, a target information indication is received. An indication way to indicate the target information indication is a first type of target information indication way or a second type of target information indication way.

In Step 32, to obtain target information from the target information indication, an obtaining way corresponding to the first type of target information indication way is utilized or an obtaining way corresponding to the second type of target information indication way is utilized.

The first type of target information indication way represents an AI-based channel state information indication way. In addition, it is also possible to have the second type of target information indication way, and the second type of target information indication way represents a non-AI-based channel state information indication way.

In the present embodiment, the target information can be channel state information (CSI).

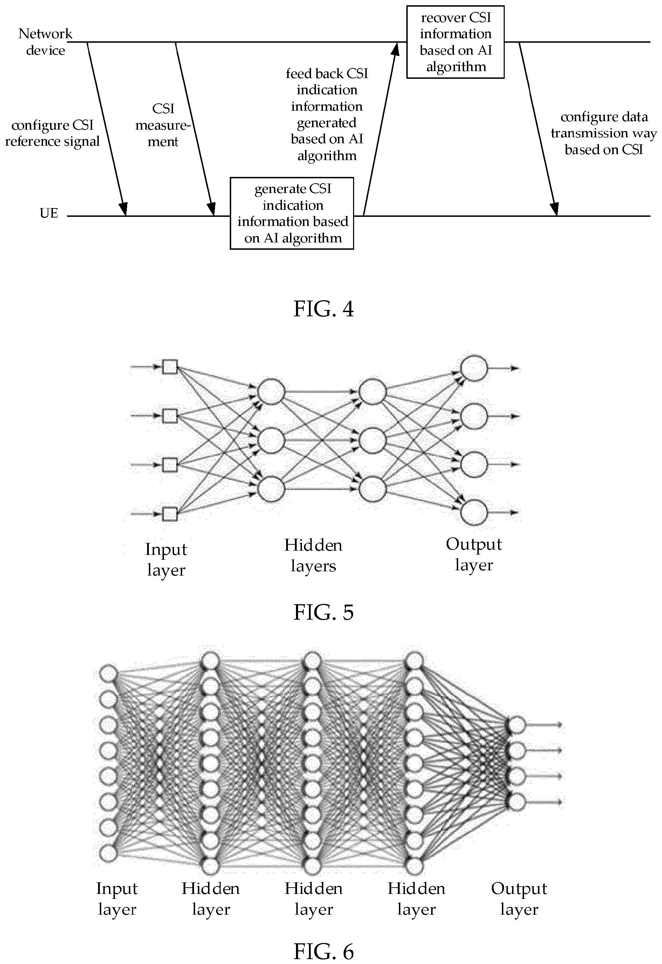

Specifically, in the AI-based channel state information indication way, as shown in FIGs. 4 and 5, the UE can use a trained neural network to output obtained target information as to-be-transmitted indication information. After receiving the indication information, the network device can use a corresponding trained neural network to restore the indication information back to actual channel state information.

In the AI-based channel-state information indication way represented by the first type of target information indication way, the AI is illustrated below based on a neural network. The fundamental structure of the neural network includes an input layer, hidden layers and an output layer, as shown in FIG. 6. The input layer is responsible for receiving data, the hidden layers process the data, and final results are produced in the output layer. Among them, each node represents a processing unit, which can be considered as simulation of a neuron. A plurality of neurons form a layer of neural network, and a plurality of layers for information propagating and processing construct a whole neural network.

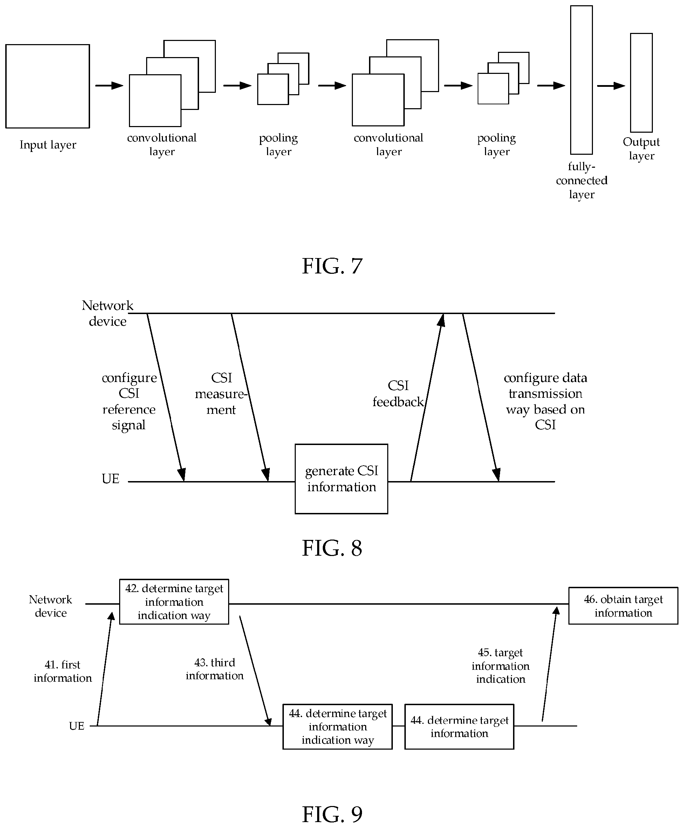

Furthermore, by integration with a neural network deep learning algorithm, much more hidden layers are incorporated, as shown in FIG. 6. By using the neural network with multiple hidden layers, training is carried out layer by layer to implement feature learning. This extremely improves the learning and processing capabilities of the neural network and is widely applicable to pattern recognition, signal processing, combination optimization, anomaly detection, and etc. With the development of deep learning, convolutional neural networks have been further studied. In a convolutional neural network, its fundamental structure includes an input layer, a plurality of convolutional layers, a plurality of pooling layers, a fully-connected layer and an output layer, as shown in FIG. 7.

It should be pointed out that when the first type of target information indication way is utilized, that is, when the AI-based channel state information indication is utilized, the network device further needs to configure the UE with some parameter information related to the way. By accompanying with the foregoing descriptions, it can be known that the parameter information that needs to be configured may include neural network parameter information, such as the number of layers of the neural network, parameter information of each layer of the neural network, convolution kernel information, the step size of convolution kernel, pooling layer parameters, and so on.

In the non-AI-based channel state information indication way, the target information indication may include channel quality indicator (CQI) information, precoding matrix indicator (PMI) information and rank indicator (RI) information. In a new radio (NR) system, feedback information such as synchronization signal (SS)/PBCH block resource indicator (SSBRI) and Layer 1 reference signal receiving power (L1-RSRP) are newly incorporated for beam management. The SSBRI is used to indicate an index of beams, and the L1-RSRP is used to indicate the strength of beams. As shown in FIG. 8, the network device will first configure some reference signals for measurements on the target information, such as synchronization signal block (SSB) or target information-reference signal (RS). The UE determines the condition of current channel state information by measuring the foregoing reference signals, and uses feedback parameters to feed back the current channel-state information to the network device for the network device to configure a reasonable and efficient way for data transmission based on current channel conditions.

With reference to the foregoing solutions, the solutions of the present embodiment will be described below in combination with a plurality of scenarios:

In Scenario 1, as shown in FIG. 9, the UE reports UE capabilities, and the network device determines an information indication way that can be utilized or adopted and notifies the UE.

In Step 41, UE sends first information.

The first information is configured to indicate whether the UE has an ability to support the first type of target information indication way.

Alternatively, the first information is configured to indicate whether the UE utilizes the first type of target information indication way to send the target information indication.

That is to say, the UE may report to the network device whether it has an ability to support the first type of target information indication way such that the network device can determine whether the UE supports the first type of target information indication way; or the UE may first determine by itself whether to utilize the first type of target information indication way and then directly indicate the determination to the network device. How the UE determines whether to utilize the first type of target information indication way can be determined based on its own capability. For example, when its own capability shows that the first type of target information indication way is supported, it can be determined to utilize the first type of target information indication way. Alternatively, although the UE itself has such a capability, the UE may not need to enable this capability and it can also be determined to utilize the second type of target information indication way. if its own capability shows that the first type of target information indication way is not supported, it can be determined to utilize the second type of target information indication way.

In this scenario, the first approach will be described below. The first information is configured to indicate whether the UE has an ability to support the first type of target information indication way.

For example, the UE sends first information, the first information indicates that the UE is equipped with first capability, and the first capability refers to an ability of the UE to support AI-based channel state information. When the UE indicates that it has the capability of AI-based channel state information, the UE can use an AI method to determine channel states or determine channel state indication information, and can send the channel state information indication information.

For another example, the UE sends first information, and the first information indicates that the UE supports AI-based target information indication. When the UE supports the AI-based target information indication, the UE can use an AI method to determine channel states or determine channel state indication information, and can send the indication information.

The afore-mentioned AI method includes deep learning, such as methods utilizing a convolutional neural network, a deep neural network, etc.; and machine learning, such as methods utilizing a classification algorithm, a regression algorithm, a clustering algorithm, a dimensionality reduction algorithm, etc.

The first information is carried by one of the following information: UE capability information, information included in a random access process, radio resource control (RRC) signaling and uplink control information (UCI).

The information included in the random access process includes one of the following:

Message A in a two-step random access process;

Msg1 in a four-step random access process; and

Msg3 in the four-step random access process.

In Step 42, the network device determines an indication way to indicate the target information indication based on the first information.

The determining the indication way to indicate the target information based on the first information includes:

determining that the indication way of the target information is the first type of target information indication way when the first information represents that the UE has the first capability and the network device supports the AI-based channel state information indication way.

That is to say, after receiving the capability report information reported by the UE, the network device determines a channel state reporting way. For example, the network device determines that current channel state information indication way is the AI-based channel state information indication way when the UE supports the AI-based channel state information indication and the network device supports the AI-based channel state information indication.

In other cases, for example, the network device determines that current channel state information way is the non-AI-based channel state information indication way (1) when the UE supports the AI-based channel state information indication and the network device does not support the AI-based channel state information indication, or (2) when the UE does not support the AI-based channel state information indication and the network device supports the AI-based channel state information indication, or (3) when the UE does not support the AI-based channel state information indication and the network device does not support the AI-based channel state information indication. In addition, for another example, even when the UE supports the AI-based channel state information indication, the network device may determine that current channel state information indication way is the non-AI-based channel state information indication way (this situation is mainly based on the implementation of the network device, offering the network device the greatest flexibility).

In Step 43, the network device sends third information.

The third information includes at least one of the followings:
an indication of a way to send the target information indication;
whether the network side has an ability to support the first type of target information indication way;
capabilities that the network side has; and
configuration parameters used at the network side.

In general, the indication way of the target information indication in the third information may include an implicit indication or an explicit indication.

For example, N1-bit (e.g., 1 bit) information can be used in third message to directly indicate the target information indication way, or it can be included whether the network side has an ability to support the first type of target information indication way. Alternatively, N2-bit information can be used in third message to indirectly indicate what is utilized currently is the AI-based channel state information indication way. The indirect indication way here can be reflected by configuration parameter used at the network side, or the type of configuration parameter used at the network side, or a different capability that is equipped at the network side.

Furthermore, when the N1 bit is set to 1, it means that the first type of target information indication way is utilized, and when the N1 bit is set to 0, it means that the second type of target information indication way is utilized. Of course, the contrary is also possible, and it will not be repeated herein. Alternatively, the base station does not indicate the target information indication way. Instead, the base station sends to the UE information regarding whether the base station itself has an ability to support the first type of target information indication way. In this case, the bit may be 1 when it is supported and may be 0 when it is not supported.

In the case where N2-bit information is adopted for the indirect indication, all the configuration parameters used by the network device itself may be sent to the UE, and it is determined by the UE whether the network device supports the first type of target information indication way. Alternatively, the type of configuration parameter used by the network device can be sent, for example, what are used by the network device can be AI-related neural network parameters. It is also possible for the network device to directly send all its capabilities to the UE through N2 bits.

The third information is carried by one of the followings: broadcast information, RRC signaling, medium access control (MAC) control element (CE), downlink control information (DCI) and information in a random access process.

Specifically, master information block (MIB), or system information block 1 (SIB1) or other SIBs can be used in the broadcast form.

The RRC signaling may be RRC dedicated signaling or may be an RRC reconfiguration message.

The information in the random access process includes one of the followings:

Message B in a two-step random access process;

Msg2 in a four-step random access process; and

Msg4 in the four-step random access process.

It should be pointed out here that the random access process in which the UE sends the first information may be different from the random access process in which the third information is received, that is, two random access processes may be used independently.

Of course, it is also possible that a same random access process is adopted. In the case where the first information and the third information are in the same random access process, the third information can be carried by Msg2 or Msg4 if the first information is Msg1 in the four-step random access process, while the third information can only be carried by Msg4 if the first information is carried by Msg3.

In Step 44, the UE determines the indication way of the target information indication based on the third information.

In this scenario, if the third information directly includes an indication of the target information indication way, the UE then directly determines the indication way of the target information indication based on the indication, that is, the UE processes based on the decision made by the network device.

In Step 45, the UE sends the target information indication.

That is, the target information indication is sent based on the way determined in the foregoing step. The UE utilizes the first-type sending way to send the channel state information indication (the AI-based channel state information indication way is adopted), or the UE utilizes the second-type sending way to send the channel state information indication (the AI-based channel state information indication way is not adopted).

In Step 46, the network device receives the target information indication, and utilizes an obtaining way corresponding to the first type of target information indication way or utilizes an obtaining way corresponding to the second type of target information indication way to obtain the target information from the target information indication.

The target information obtaining way corresponds to the target information indication way. For example, if the AI-based channel state information indication way is utilized, an AI-based channel state obtaining way is utilized accordingly.

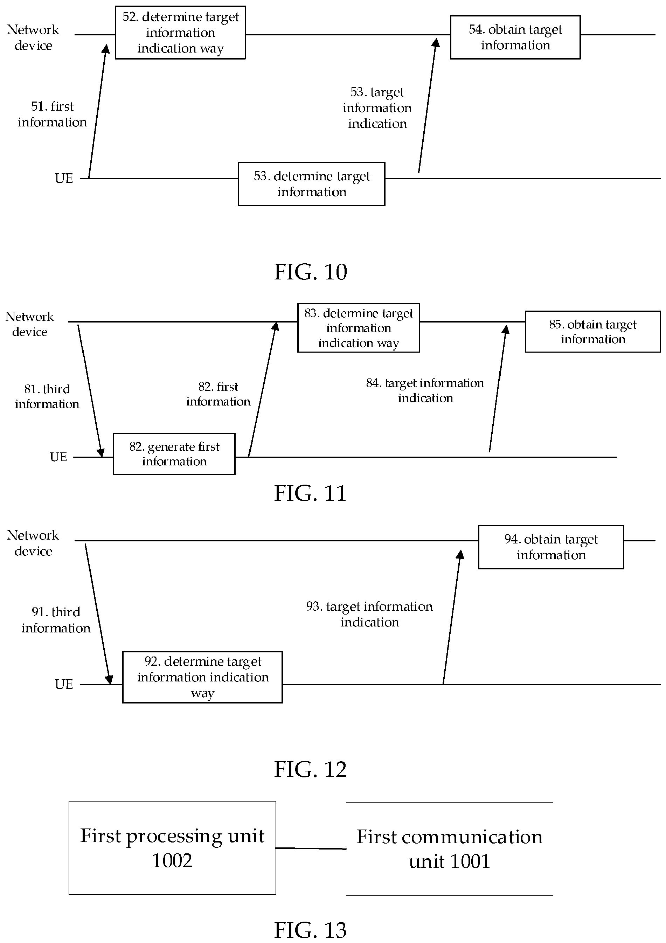

In Scenario 2, the UE indicates an information indication way that can be utilized. Referring to FIG. 10, it will be described in detail below.

In Step 51, the UE sends first information.

The first information is configured to indicate whether the UE has an ability to support the first type of target information indication way.

Alternatively, the first information is configured to indicate whether the UE utilizes the first type of target information indication way to send the target information indication.

That is to say, the UE may report to the network device whether it has an ability to support the first type of target information indication way such that the network device can determine whether the UE supports the first type of target information indication way; or the UE may first determine by itself whether to utilize the first type of target information indication way and then directly indicate the determination to the network device. How the UE determines whether to utilize the first type of target information indication way can be determined based on its own capability. For example, when its own capability shows that the first type of target information indication way is supported, it can be determined to utilize the first type of target information indication way. Alternatively, although the UE itself has such a capability, the UE may not need to enable this capability and it can also be determined to utilize the second type of target information indication way. if its own capability shows that the first type of target information indication way is not supported, it can be determined to utilize the second type of target information indication way.

In Step 42, the network device receives the first information and determines an indication way to indicate the target information indication.

That is, after the first information reported by the UE is received, a channel state reporting way is determined. The network device determines that current channel state information indication way is the AI-based channel state information indication way when the UE supports the AI-based channel state information indication. The network device determines that current channel state information indication way is the non-AI-based channel state information indication way when the UE does not support the AI-based channel state information indication.

The difference between this scenario and Scenario 1 is that in this scenario the network device can be a network device that supports the first type of target information indication way by default, that is, the capabilities of the network device include a support of the first type of target information indication way.

As long as the network device determines whether the UE supports the first type of target information indication way based on the first information reported by the terminal device, it can be determined the target information indication way that is to be utilized by both parties.

Specifically, when the UE reports that the UE itself has an ability to support the first type of target information indication way, it may be determined to utilize the first type of target information indication way. Alternatively, when the UE's reporting indicates that the UE utilizes the first type of target information indication way to send the target information Indication, it may also be determined to utilize the first type of target information indication way.

In Step 53, the UE determines target information and sends target information indication.

Specifically, the UE sends the target information indication based on whether the UE itself supports the first type of target information indication way, represented by the foregoing sent first information. That is, when the first information indicates that the UE does not support the first type of target information indication way, the second type of target information indication is utilized; otherwise, the first type of target information indication way is utilized to send the target information indication.

It is also possible that the first type of target information indication way is utilized in this step to send the target information indication when the first information represents that the UE has an ability to support the first type of target information indication way; otherwise, the second type of target information indication is utilized to send the target information indication.

In Step 54, the network device receives the target information indication and utilizes a determined target information obtaining way to obtain target information from a target information indication message.

The target information obtaining way corresponds to the target information indication way. Specifically, for example, if the AI-based channel state information indication way is utilized, an AI-based channel state obtaining way is utilized accordingly.

In Scenario 3, the network device notifies the capabilities of the network device, and the UE determines an information indication way that can be utilized and notifies this to the network device. Referring to FIG. 11, it will be described in detail below.

In Step 81, the network device sends third information.

The third information includes at least one of the followings:
an indication of a way to send the target information indication;
whether a network side has an ability to support the first type of target information indication way;
capabilities that the network side has; and
configuration parameters used at the network side.

In general, the indication way of the target information indication in the third information may include an implicit indication or an explicit indication.

For example, N1-bit (e.g., 1 bit) information can be used in third message to directly indicate the target information indication way, or it can be included whether the network side has an ability to support the first type of target information indication way. Alternatively, N2-bit information can be used in third message to indirectly indicate what is utilized currently is the AI-based channel state information indication way. The indirect indication way here can be reflected by configuration parameter used at the network side, or the type of configuration parameter used at the network side, or a different capability that is equipped at the network side.

Furthermore, when the N1 bit is set to 1, it means that the first type of target information indication way is utilized, and when the N1 bit is set to 0, it means that the second type of target information indication way is utilized. Of course, the contrary is also possible, and it will not be repeated herein. Alternatively, the base station does not indicate the target information indication way. Instead, the base station sends to the UE information regarding whether the base station itself has an ability to support the first type of target information indication way. In this case, the bit may be 1 when it is supported and may be 0 when it is not supported.

In the case where N2-bit information is adopted for the indirect indication, all the configuration parameters used by the network device itself may be sent to the UE, and it is determined by the UE whether the network device supports the first type of target information indication way. Alternatively, the type of configuration parameter used by the network device can be sent, for example, what are used by the network device can be AI-related neural network parameters. It is also possible for the network device to directly send all its capabilities to the UE through N2 bits.

The third information is carried by one of the followings: broadcast information, RRC signaling, medium access control (MAC) control element (CE), downlink control information (DCI) and information in a random access process.

Specifically, master information block (MIB), or system information block 1 (SIB1) or other SIBs can be used in the broadcast form.

The RRC signaling may be RRC dedicated signaling or may be an RRC reconfiguration message.

The information in the random access process includes one of the followings:

Message B in a two-step random access process;

Msg2 in a four-step random access process; and

Msg4 in the four-step random access process.

In an example, the network device sends third information indicating that the network device is equipped with first capability, and the first capability refers to an ability of the network device to support AI-based channel state information indication.

In another example, the network device sends the third information indicating that the network device supports the AI-based target information indication.

In still another example, the network device sends the third information indicating all the capabilities that the network device currently has.

In yet another example, the network device sends the third information indicating configuration parameter that the network device currently uses or the type of configuration parameter that is currently used.

In Step 82, the UE receives the third information, generates first information based on the third information and sends the first information.

The first information is configured to indicate whether the UE utilizes the first type of target information indication way to send the target information indication.

For example, the UE receives the third information indicating a way to send the target information indication. Meanwhile, if the network device indicates the first type of target information indication way and the UE supports the first type of target information indication way, then the first information may indicate that the UE utilizes the first type of target information indication way to send the target information indication; otherwise, the first information indicates that the UE does not utilize the first type of target information indication way to send the target information indication.

For example, the third information indicates whether the network side has an ability to support the first type of target information indication way. If the UE supports the first type of target information indication way and the network device also supports the first type of target information indication way, it can be determined that the first information may indicate that the UE utilizes the first type of target information indication way to send the target information indication; otherwise, the first information indicates that the UE does not utilize the first type of target information indication way to send the target information indication.

For example, the third information indicates the capability that the network side has, that is, all the capabilities that the network side is equipped with. If the UE supports the first type of target information indication way and the capabilities that the network device has include a capability to support the first type of target information indication way, it can be determined that the first information may indicate that the UE utilizes the first type of target information indication way to send the target information indication; otherwise, the first information indicates that the UE does not utilize the first type of target information indication way to send the target information indication.

For example, the third information includes configuration parameters used at the network side. It can be determined whether the network device supports the first type of target information indication way based on whether the configuration parameters used by the network device are neural network parameters. If the UE supports the first type of target information indication way and the network device also supports the first type of target information indication way, it can be determined that the first information may indicate that the UE utilizes the first type of target information indication way to send the target information indication; otherwise, the first information indicates that the UE does not utilize the first type of target information indication way to send the target information indication.

The way to send the first information is as the same as the foregoing scenario and will not be repeated herein.

In Step 83, the network device receives the first information and determines an indication way to indicate the target information indication based on the first information.

For example, after receiving the first information reported by the UE, the network device determines the way to report channel states. When the first information indicates that the UE utilizes the first type of target information indication way, the network device determines that the target information indication way is the first type of target information indication way; otherwise, the second type of target information indication way is utilized.

Further, meanwhile, the network device may also determine a corresponding target information obtaining way based on the determined target information indication way.

In Step 84, the UE sends the target information indication.

Specifically, the target information indication is sent by the target information indication way that is utilized by the UE and is determined in the foregoing step. For example, when the first information indicates that the UE utilizes the first type of target information indication way, the UE utilizes the first type of target information indication way to send the channel state information indication.

In Step 85, the network device receives the target information indication and obtains the target information from the target information indication message based on the indication way of the target information indication. That is, the network device obtains the target information from the target information indication message by the determined target information obtaining way.

In Scenario 4, the network device indicates information indication ways that can be utilized. Referring to FIG. 12, it will be described in detail below.

In Step 91, the network device sends third information.

At this time, by default, the network device may consider that the UE side has an ability to support the first type of target information indication way, and therefore the network device directly sends the capabilities of the network device to the UE.

The details of the third information and its sending way are as the same as Step 81 and will not be repeated herein.

In Step 92, the UE receives the third information and determines an indication way to indicate target information indication.

For example, the third information indicates a way to send the target information indication. Meanwhile, if the network device indicates the first type of target information indication way and the UE supports the first type of target information indication way, it is then determined that the indication way of the target information indication is that the UE utilizes the first type of target information indication way; otherwise, the UE does not utilize the first type of target information indication way.

For example, the third information indicates whether the network side has an ability to support the first type of target information indication way. If the UE supports the first type of target information indication way and the network device also supports the first type of target information indication way, it can be determined that the UE utilizes the first type of target information indication way; otherwise, the UE utilizes the second type of target information indication way.

For example, the third information indicates the capability that the network side has, that is, all the capabilities that the network side is equipped with. If the UE supports the first type of target information indication way and the capabilities that the network device has include a capability to support the first type of target information indication way, it can be determined that the UE utilizes the first type of target information indication way; otherwise, the UE utilizes the second type of target information indication way.

For example, the third information includes configuration parameters used at the network side. It can be determined whether the network device supports the first type of target information indication way based on whether the configuration parameters used by the network device are neural network parameters. If the UE supports the first type of target information indication way and the network device also supports the first type of target information indication way, the UE can utilize the first type of target information indication way to send the target information indication; otherwise, the second type of target information indication way is utilized while the first type of target information indication way is not utilized.

In Step 93, the UE sends the target information indication.

Specifically, the target information indication is sent based on the target information indication way determined in Step 92.

In Step 94, the network device receives the target information indication and obtains the target information from the target information indication message based on the indication way of the target information indication.

In this scenario, the network device has first notified the UE of the target information indication ways that the network device itself can support or whether the network device supports the first type of target information indication way. Therefore, in a case where the network device supports the first type of target information indication way, if the UE does not have this ability, the UE utilizes the second type of target information indication way to send the target information indication. Because the network device has strong capabilities, the network device can obtain corresponding target information from the target information indication sent in the second type of target information indication way. In a case where the network device does not support the first type of target information indication way, after obtaining the third information at the UE side, the UE determines to utilize the second type of target information indication way no matter whether the UE itself has an ability to support the first type of target information indication way. In this way, it can also be ensured that the determined target information indication way is same for the two parties.

That is, the network device obtains the target information from the target information indication message by the determined target information obtaining way.

The target information obtaining way corresponds to the target information indication way. Specifically, for example, if the AI-based channel state information indication way is utilized, an AI-based channel state obtaining way is utilized accordingly.

Based on the foregoing scenarios, the present embodiment further provides processing the obtaining parameter information configured by the network device. It is described in detail below.

The processing made by the UE may further include receiving at least one set of parameter information, wherein the parameter information is neural network parameter information that can be used when the UE utilizes the first type of target information indication way.

Correspondingly, the processing made by the network device may further include sending at least one set of parameter information.

The neural network parameter information may include at least one of the followings: the number of layers of the neural network, parameter information of each layer of the neural network, convolution kernel information, the step size of convolution kernel and pooling layer parameters.

The at least one set of parameter information is carried by broadcast information, or by RRC signaling, or by random access response, or by MAC CE, or by DCI.

The broadcast information is, for example, MIB, SIB1, or other SIB messages. The RRC signaling may be dedicated signaling or may be a RRC reconfiguration message.

When the network device configures at least two sets of parameter information (that is, a plurality of sets of parameter information) for the UE, it also needs to determine which parameter information the UE finally activates. Therefore, the present embodiment further provides two approaches to determine activated parameters.

In Approach 1, the parameter information is activated by the network device.

In the case where at least two sets of parameter information are configured at the network device side, the method further includes:
sending a first notification configured to notify the parameter information that is activated.

Correspondingly, in the case where at least two sets of parameter information are received at the UE side, the method further includes:
receiving a first notification.

The first notification is carried by broadcast information, or by RRC signaling, or by random access response, or by MAC CE, or by DCI.

In other words, the network device can configure a plurality of sets of the afore-described parameters to the UE, and the ways for the network device to configure the plurality of sets of the afore-described parameters for the UE include: (1) using broadcast information, such as MIB, SIB1, or other SIB messages; and (2) using RRC dedicated signalling, such as a RRC reconfiguration message.

In Approach 2, the parameter information is activated by the UE.

At the UE side, the method further includes: sending a second notification for activating at least a part of the plurality of sets of parameter information.

The second notification is carried by RRC signaling, or by random access request, or by MAC CE, or by UCI.

Alternatively, there is also a situation. That is, the parameters are not sent by the network device for the UE. Instead, the parameters are sent by the UE actively. That is, the UE sends at least one set of parameter information used. Correspondingly, the network device receives the at least one set of parameter information used by the UE. The parameter information used by the UE is neural network parameter information used when the UE utilizes the first type of target information indication way.

The at least one set of parameter information used by the UE is carried by RRC signaling, or by random access request, or by MAC CE, or by UCI.

At this time, the UE does not need to indicate to the network side more parameter information the UE saved. The UE only needs to indicate to the network side which parameter information the UE itself currently can use. Then, based on the parameter information used by the UE, the network device can further determine whether the UE supports the first type of target information indication way.

By utilizing above solutions, the target information indication can be sent by means of the first type of target information indication way or the second type of target information indication way. In this way, it can provide corresponding channel state information indication ways for different types of devices and different environmental scenarios, thereby improving user experience and overall network performance.

An embodiment of the present invention provides a UE. As shown in FIG. 13, the UE includes:
a first communication unit 1001, for sending a target information indication,
wherein an indication way to indicate the target information indication is a first type of target information indication way or a second type of target information indication way.

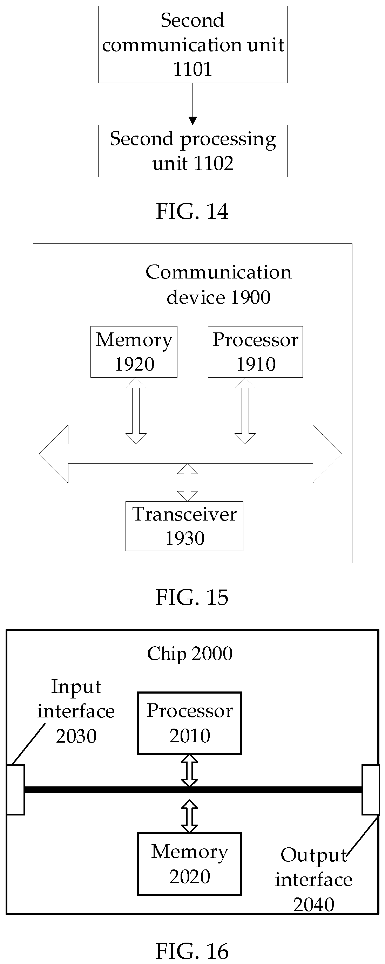

Correspondingly, at a network device side, a network device provided in the present embodiment includes the followings, as shown in FIG. 14.
a second communication unit 1101, for receiving a target information indication, wherein an indication way to indicate the target information indication is a first type of target information indication way or a second type of target information indication way; and
a second processing unit 1102, for obtaining target information from the target information indication by utilizing an obtaining way corresponding to the first type of target information indication way or by utilizing an obtaining way corresponding to the second type of target information indication way.

The first type of target information indication way represents an AI-based channel state information indication way. In addition, it is also possible to have the second type of target information indication way, and the second type of target information indication way represents a non-AI-based channel state information indication way.

In the present embodiment, the target information can be channel state information (CSI).

With reference to the foregoing solutions, the solutions of the present embodiment will be described below in combination with a plurality of scenarios:

In Scenario 1, the UE reports UE capabilities, and the network device determines an information indication way that can be utilized or adopted and notifies the UE.

The first communication unit 1001 of the UE sends first information.

The first information is configured to indicate whether the UE has an ability to support the first type of target information indication way.

Alternatively, the first information is configured to indicate whether the UE utilizes the first type of target information indication way to send the target information indication.

The first information is carried by one of the following information: UE capability information, information included in a random access process, radio resource control (RRC) signaling and uplink control information (UCI).

The information included in the random access process includes one of the following:

Message A in a two-step random access process;

Msg1 in a four-step random access process; and

Msg3 in the four-step random access process.

The second processing unit 1102 of the network device determines, based on the first information, an indication way to indicate the target information indication.

The determining the indication way to indicate the target information based on the first information includes:

The second processing unit 1102 determines that the indication way of the target information is the first type of target information indication way when the first information represents that the UE has the first capability and the network device supports the AI-based channel state information indication way.

The second communication unit 1101 of the network device sends third information.

The third information includes at least one of the followings:
an indication of a way to send the target information indication;
whether the network side has an ability to support the first type of target information indication way;
capabilities that the network side has; and
configuration parameters used at the network side.

The third information is carried by one of the followings: broadcast information, RRC signaling, medium access control (MAC) control element (CE), downlink control information (DCI) and information in a random access process.

Specifically, master information block (MIB), or system information block 1 (SIB1) or other SIBs can be used in the broadcast form.

The RRC signaling may be RRC dedicated signaling or may be an RRC reconfiguration message.

The information in the random access process includes one of the followings:

Message B in a two-step random access process;

Msg2 in a four-step random access process; and

Msg4 in the four-step random access process.

It should be pointed out here that the random access process in which the UE sends the first information may be different from the random access process in which the third information is received, that is, two random access processes may be used independently.

Of course, it is also possible that a same random access process is adopted. In the case where the first information and the third information are in the same random access process, the third information can be carried by Msg2 or Msg4 if the first information is Msg1 in the four-step random access process, while the third information can only be carried by Msg4 if the first information is carried by Msg3.

The UE may further include a first processing unit 1002, for determining, based on the third information, a way to send the target information indication.

In this scenario, if the third information directly includes an indication of the target information indication way, the UE then directly determines the indication way of the target information indication based on the indication, that is, the UE processes based on the decision made by the network device.

The first communication unit 1001 of the UE sends the target information indication.

That is, the target information indication is sent based on the way determined in the foregoing step. The UE utilizes the first-type sending way to send the channel state information indication (the AI-based channel state information indication way is adopted), or the UE utilizes the second-type sending way to send the channel state information indication (the AI-based channel state information indication way is not adopted).

The second communication unit 1101 of the network device receives the target information indication, and the second processing unit 1102 utilizes an obtaining way corresponding to the first type of target information indication way or utilizes an obtaining way corresponding to the second type of target information indication way to obtain the target information from the target information indication.

The target information obtaining way corresponds to the target information indication way. For example, if the AI-based channel state information indication way is utilized, an AI-based channel state obtaining way is utilized accordingly.

In Scenario 2, the UE indicates an information indication way that can be utilized. It will be described in detail below.

The first communication unit 1001 of the UE sends first information.

The first information is configured to indicate whether the UE has an ability to support the first type of target information indication way.

Alternatively, the first information is configured to indicate whether the UE utilizes the first type of target information indication way to send the target information indication.

The second communication unit 1101 of the network device receives the first information. The second processing unit 1102 of the network device determines an indication way to indicate the target information indication.

That is, after the first information reported by the UE is received, a channel state reporting way is determined. The network device determines that current channel state information indication way is the AI-based channel state information indication way when the UE supports the AI-based channel state information indication. The network device determines that current channel state information indication way is the non-AI-based channel state information indication way when the UE does not support the AI-based channel state information indication.

The difference between this scenario and Scenario 1 is that in this scenario the network device can be a network device that supports the first type of target information indication way by default, that is, the capabilities of the network device include a support of the first type of target information indication way.

As long as the second processing unit of the network device determines whether the UE supports the first type of target information indication way based on the first information reported by the terminal device, it can be determined the target information indication way that is to be utilized by both parties.

The first processing unit 1002 of the UE determines target information and sends the target information indication using the first communication unit 1001.

The second communication unit 1101 of the network device receives the target information indication and the second processing unit 1102 utilizes a determined target information obtaining way to obtain target information from a target information indication message.

The target information obtaining way corresponds to the target information indication way. Specifically, for example, if the AI-based channel state information indication way is utilized, an AI-based channel state obtaining way is utilized accordingly.

In Scenario 3, the network device notifies the capabilities of the network device, and the UE determines an information indication way that can be utilized and notifies this to the network device. It will be described in detail below.

The second communication unit 1101 of the network device sends third information.

The third information includes at least one of the followings:
an indication of a way to send the target information indication;
whether a network side has an ability to support the first type of target information indication way;
capabilities that the network side has; and
configuration parameters used at the network side.

The first communication unit 1001 of the UE receives the third information, the first processing unit 1002 generates first information based on the third information, the first communication unit 1001 sends the first information.

The first information is configured to indicate whether the UE utilizes the first type of target information indication way to send the target information indication.

The way to send the first information is as the same as the foregoing scenario and will not be repeated herein.

The second communication unit 1101 of the network device receives the first information. The second processing unit 1102 determines, based on the first information, an indication way to indicate the target information indication.

The first communication unit 1001 of the UE sends the target information indication.

The second communication unit 1101 of the network device receives the target information indication and the second processing unit 1102 obtains the target information from a target information indication message based on the indication way of the target information indication. That is, the network device obtains the target information from the target information indication message by the determined target information obtaining way.

In Scenario 4, the network device indicates information indication ways that can be utilized.

The second communication unit 1101 of the network device sends third information.

At this time, by default, the network device may consider that the UE side has an ability to support the first type of target information indication way, and therefore the network device directly sends the capabilities of the network device to the UE.

The details of the third information and its sending way are as the same as above and will not be repeated herein.

The first communication unit 1001 of the UE receives the third information. The first processing unit 1002 of the UE determines an indication way to indicate the target information indication.

The first communication unit 1001 of the UE sends the target information indication.

The second communication unit 1101 of the network device receives the target information indication and the second processing unit 1102 obtains the target information from a target information indication message based on the indication way of the target information indication.

Based on the foregoing scenarios, the present embodiment further provides processing the obtaining parameter information configured by the network device. It is described in detail below.

The processing made by the UE may further include the followings. The first communication unit 1001 receives at least one set of parameter information, wherein the parameter information is neural network parameter information that can be used when the UE utilizes the first type of target information indication way.

Correspondingly, the processing made by the network device may further include the followings. The second communication unit 1101 sends at least one set of parameter information.

The neural network parameter information may include at least one of the followings: the number of layers of the neural network, parameter information of each layer of the neural network, convolution kernel information, the step size of convolution kernel and pooling layer parameters.

The at least one set of parameter information is carried by broadcast information, or by RRC signaling, or by random access response, or by MAC CE, or by DCI.

The broadcast information is, for example, MIB, SIB1, or other SIB messages. The RRC signaling may be dedicated signaling or may be a RRC reconfiguration message.

When the network device configures at least two sets of parameter information (that is, a plurality of sets of parameter information) for the UE, it also needs to determine which parameter information the UE finally activates. Therefore, the present embodiment further provides two approaches to determine activated parameters.

In Approach 1, the parameter information is activated by the network device.

At the network device side, in a case where at least two sets of parameter information are configured,

the second communication unit 1101 sends a first notification configured to notify the parameter information that is activated.

Correspondingly, at the UE side, the first communication unit 1001 receives the first notification.

The first notification is carried by broadcast information, or by RRC signaling, or by random access response, or by MAC CE, or by DCI.

In Approach 2, the parameter information is activated by the UE.

At the UE side, the method further includes the followings. The first communication unit 1001 sends a second notification for activating at least a part of the plurality of sets of parameter information.

The second notification is carried by RRC signaling, or by random access request, or by MAC CE, or by UCI.

Alternatively, there is also a situation. That is, the parameters are not sent by the network device for the UE. Instead, the parameters are sent by the UE actively. That is, the first communication unit of the UE sends at least one set of parameter information used. Correspondingly, the second communication unit of the network device receives the at least one set of parameter information used by the UE. The parameter information used by the UE is neural network parameter information used when the UE utilizes the first type of target information indication way.

The at least one set of parameter information used by the UE is carried by RRC signaling, or by random access request, or by MAC CE, or by UCI.

At this time, the UE does not need to indicate to the network side more parameter information the UE saved. The UE only needs to indicate to the network side which parameter information the UE itself currently can use. Then, based on the parameter information used by the UE, the network device can further determine whether the UE supports the first type of target information indication way.

By utilizing above solutions, the target information indication can be sent by means of the first type of target information indication way or the second type of target information indication way. In this way, it can provide corresponding channel state information indication ways for different types of devices and different environmental scenarios, thereby improving user experience and overall network performance.

FIG. 15 is a schematic diagram illustrating the structure of a communication device 1900 provided in an embodiment of the present invention. The communication device in the present embodiment can be the terminal device or the network device in the foregoing embodiments. The communication device 1900 shown in FIG. 15 includes a processor 1910, wherein the processor 1910 may call and run a computer program from a memory to implement a method in an embodiment of the present invention.

Optionally, as shown in FIG. 15, the communication device 1900 may further include a memory 1920. The processor 1910 may call and run a computer program from the memory 1920 to implement a method in an embodiment of the present invention.

The memory 1920 may be a separate device independent of the processor 1910 or may be integrated in the processor 1910.

Optionally, as shown in FIG. 15, the communication device 1900 may further include a transceiver 1930, and the processor 1910 may control the transceiver 1930 to communicate with another device. Specifically, information or data may be sent to another device, or information or data sent by another device is received.

The transceiver 1930 may include a transmitter and a receiver. The transceiver 1930 may further include antennas, wherein the number of antennas may be one or more.

Optionally, the communication device 1900 may be a network device according to an embodiment of the present invention, and the communication device 1900 may implement corresponding processes implemented by the network device in various methods of embodiments of the present invention, which will not be repeated here for the sake of brevity.

Optionally, the communication device 1900 may be the terminal device or the network device according to an embodiment of the present invention, and the communication device 1900 may implement corresponding processes implemented by the mobile terminal/the terminal device in various methods of the embodiments of the present invention, which will not be repeated here for the sake of brevity.

FIG. 16 is a schematic diagram illustrating the structure of a chip according to an embodiment of the present invention. The chip 2000 shown in FIG. 16 includes a processor 2010, wherein the processor 2010 may call and run a computer program from a memory to implement a method in an embodiment of the present invention.

Optionally, as shown in FIG. 16, the chip 2000 may further include a memory 2020. The processor 2010 may call and run a computer program from the memory 2020 to implement a method in an embodiment of the present invention.

The memory 2020 may be a separate device independent of the processor 2010 or may be integrated in the processor 2010.

Optionally, the chip 2000 may further include an input interface 2030. The processor 2010 may control the input interface 2030 to communicate with other devices or chips, in particular, to acquire information or data transmitted by other devices or chips.

Optionally, the chip 2000 may further include an output interface 2040. The processor 2010 may control the output interface 840 to communicate with other devices or chips, in particular, to output information or data to other devices or chips.

Optionally, the chip can be applied to the terminal device or the network device in the embodiment of the present invention; moreover, the chip may perform corresponding processes implemented by the terminal device in each of the methods of the embodiment of the present invention. For brevity, details will not be described herein again.

It should be understood that the chip mentioned in the embodiments of the present invention can be called a system-level chip, a system-on-chip, a chip system.

It is to be understood that the processor of the embodiment of the present invention may be an integrated circuit chip with signal processing capabilities. In the implementation process, each step of the foregoing method embodiment may be completed by an integrated logic circuit in the processor or instructions in a form of software. The foregoing processor may be a general-purpose processor, a digital signal processor (DSP), an application specific integrated circuit (ASIC), a field programmable gate array (FPGA), or other programmable logic device, discrete gate, or a transistor logic device, or a discrete hardware component. The methods, steps, and logical block diagrams disclosed in the embodiments of the present invention can be implemented or executed. The general-purpose processor may be a microprocessor or the processor may also be any conventional processor, or the like. The steps of the method disclosed in the embodiments of the present invention may be directly implemented by the hardware decoding processor, or may be performed by a combination of hardware and software modules in the decoding processor. The software module may be located in a conventional storage medium in the art, such as a random access memory, a flash memory, a read only memory, a programmable read only memory or an electrically erasable programmable memory, and a register. The storage medium is located in the memory, and the processor reads the information in the memory and completes the steps of the above method in combination with its hardware.

It is understood that the memory in the embodiments of the present invention may be a volatile memory or a non-volatile memory, or may include both volatile and non-volatile memory. Suitable non-volatile memories may include read only memory (ROM), programmable ROM (PROM), erasable programmable ROM (EPROM), electrically erasable programmable ROM (EEPROM), or flash memory. Volatile memories may include random access memory (RAM), which acts as an external cache. By way of example, but not limitation, many forms of RAM are available, such as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synch link DRAM (SLDRAM) and a Direct Rambus RAM (DR RAM). It should be noted that the memory of the systems and methods described herein may include, but not limited to, these and any other suitable types of memory.

It is to be understood that foregoing memory is exemplary but not limited, and for example, the memory in the embodiments of the present invention may also be as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synch link DRAM (SLDRAM) or a Direct Rambus RAM (DR RAM). That is, the memory in the embodiments of the present invention includes, but is not limited to, these and any other suitable types of memory.

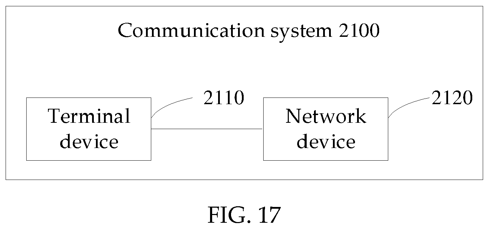

FIG. 17 is a schematic block diagram illustrating a communication system 2100 provided in an embodiment of the present application. As shown in FIG. 17, the communication system 2100 includes a UE 2110 and a network device 2120.

The UE 2110 can be used to implement corresponding functions implemented by the terminal device in afore-described methods, and the network device 2120 can be used to implement corresponding functions implemented by the network device in afore-described methods. For brevity, details will not be described herein again.

The embodiment of the present invention further provides a computer readable storage medium for storing a computer program.

Optionally, the computer readable storage medium can be applied to the network device in the embodiment of the present invention; moreover, the computer readable storage medium enables a computer to execute corresponding processes implemented by the network device in each of the methods of the embodiment of the present invention. For brevity, details will not be described herein again.

Optionally, the computer readable storage medium can be applied to the terminal device in the embodiment of the present invention; moreover, the computer readable storage medium enables a computer to execute corresponding processes implemented by the mobile terminal/the terminal device in each of the methods of the embodiment of the present invention. For brevity, details will not be described herein again.

The embodiment of the present invention further provides a computer program product including computer program instructions.

Optionally, the computer program product can be applied to the network device in the embodiment of the present invention; moreover, the computer program product enables a computer to execute corresponding processes implemented by the network device in each of the methods of the embodiment of the present invention. For brevity, details will not be described herein again.

Optionally, the computer program product can be applied to the mobile terminal/the terminal device in the embodiment of the present invention; moreover, the computer program product enables a computer to execute corresponding processes implemented by the mobile terminal/the terminal device in each of the methods of the embodiment of the present invention. For brevity, details will not be described herein again.

The embodiment of the present invention further provides a computer program.

Optionally, the computer program can be applied to the network device in the embodiment of the present invention; moreover, the computer program enables a computer to execute corresponding processes implemented by the network device in each of the methods of the embodiment of the present invention. For brevity, details will not be described herein again.

Optionally, the computer program can be applied to the mobile terminal/the terminal device in the embodiment of the present invention; moreover, the computer program enables a computer to execute corresponding processes implemented by the mobile terminal/the terminal device in each of the methods of the embodiment of the present invention. For brevity, details will not be described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different approaches to implement the described functions for each particular application, but it should not be considered that the implementation goes beyond the scope of the present invention.

It may be clearly understood by a person skilled in the art that, for ease and brevity of description, for a detailed working process of the foregoing system, apparatus, and unit, reference may be made to a corresponding process in the foregoing embodiments, and details are not described herein again.

In the several embodiments provided in the present invention, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the presented or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts presented as units may or may not be physical units, may be located in one position, or may be distributed on a plurality of network units. Some or all of the units may be selected according to actual requirements to achieve the purposes of the solutions of the embodiments.

In addition, functional units in the embodiments of the present invention may be integrated into one processor, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the approaches described in the embodiments of the disclosure. The foregoing storage medium includes any medium that can store program code, such as a USB flash drive, a removable hard disk, a Read-Only Memory (ROM), a Random Access Memory (RAM), a magnetic disk, or an optical disc.

The foregoing description is only a specific implementation manner of the present invention. The protection scope of the present invention, however, is not limited thereto. Various modifications or replacements may be readily conceivable to any person skilled in the art within the technical scope disclosed in the present invention, and such modifications or replacements shall fall within the protection scope of the present invention. Therefore, the scope of protection of the present invention shall be subjected to the scope of protection in the claims.

## Claims

1. An information processing method, applied to a user equipment (UE), the method comprising:
sending a target information indication,
wherein an indication way to indicate the target information indication is a first type of target information indication way or a second type of target information indication way.

2. The method of claim 1, further comprising:
sending first information,
wherein the first information is configured to indicate whether the UE has an ability to support the first type of target information indication way; or
the first information is configured to indicate whether the UE utilizes the first type of target information indication way to send the target information indication.

3. The method of claim 1, wherein the sending the target information indication comprises:
utilizing the first type of target information indication way to send the target information indication when the UE has an ability to support the first type of target information indication way; and
utilizing the second type of target information indication way to send the target information indication when the UE does not have the ability to support the first type of target information indication way.

4. The method of any of claims 1 to 3, wherein the first type of target information indication way represents an artificial intelligence (AI)-based channel state information indication way; and
the second type of target information indication way represents a non-AI-based channel state information indication way.

5. The method of claim 2, wherein the first information is carried by one of the following information: UE capability information, information comprised in a random access process, radio resource control (RRC) signaling and uplink control information (UCI).

6. The method of claim 5, wherein the information comprised in the random access process comprises one of the followings:
Message A in a two-step random access process;
Msg1 in a four-step random access process; and
Msg3 in the four-step random access process.

7. The method of any of claims 1, 2 and 4 to 6, further comprising:
receiving third information,
wherein the third information comprises at least one of the followings:
an indication of a way to send the target information indication;
whether a network side has an ability to support the first type of target information indication way;
capabilities that the network side has; and
configuration parameters used at the network side.

8. The method of claim 7, wherein the third information is carried by one of the followings:
broadcast information, RRC signaling, medium access control (MAC) control element (CE),
downlink control information (DCI) and information in a random access process.

9. The method of claim 8, wherein the information in the random access process comprises one of the followings:
Message B in a two-step random access process;
Msg2 in a four-step random access process; and
Msg4 in the four-step random access process.

10. The method of claim 7, further comprising:
determining, based on the third information, a way to send the target information indication.

11. The method of claim 10, wherein the determining, based on the third information, the way to send the target information indication comprises:
determining, based on a way indicated in the third information to send the target information indication, the way to send the target information indication.

12. The method of claim 11, wherein the determining, based on the third information, the way to send the target information indication comprises:
determining to utilize the first type of target information indication way when the third information represents that a network side has an ability to support a first type of target information indication and the UE has an ability to support the first type of target information indication.

13. The method of claim 11, wherein the determining, based on the third information, the way to send the target information indication comprises:
based on the capabilities of a network side comprised in the third information, determining whether the network side supports a first type of target information indication; and
determining to utilize the first type of target information indication way when determining that the network side supports and the UE has an ability to support the first type of target information indication.

14. The method of claim 11, wherein the determining, based on the third information, the way to send the target information indication comprises:
based on configuration parameters of a network side comprised in the third information, determining whether the network side supports a first type of target information indication; and
determining to utilize the first type of target information indication way when determining that the network side supports and the UE has an ability to support the first type of target information indication.

15. The method of any of claims 1 to 14, further comprising:
receiving at least one set of parameter information, wherein the parameter information is neural network parameter information that can be used when the UE utilizes the first type of target information indication way.

16. The method of claim 15, wherein the at least one set of parameter information is carried by broadcast information, or by RRC signaling, or by random access response, or by MAC CE, or by DCI.

17. The method of claim 15, wherein when at least two sets of parameter information are received, the method further comprises:
receiving a first notification and determining, based on the first notification, the parameter information that is activated.

18. The method of claim 17, wherein the first notification is carried by broadcast information, or by RRC signaling, or by random access response, or by MAC CE, or by DCI.

19. The method of claim 15, further comprising:
sending a second notification for activating at least a part of the plurality of sets of parameter information.

20. The method of claim 19, wherein the second notification is carried by random-access RRC signaling, or by random access request, or by MAC CE, or by UCI.

21. The method of any of claims 1 to 14, further comprising:
sending at least one set of parameter information used by the UE when the UE has an ability to support the first type of target information indication way, wherein the parameter information used by the UE is neural network parameter information that is used when the UE utilizes the first type of target information indication way.

22. The method of claim 21, wherein the at least one set of parameter information used by the UE is carried by RRC signaling, or by random access request, or by MAC CE, or by UCI.

23. The method of any of claims 1 to 22, wherein the target information is channel state information (CSI).

24. An information processing method, applied to a network device, the method comprising:
receiving a target information indication, wherein an indication way to indicate the target information indication is a first type of target information indication way or a second type of target information indication way; and
obtaining target information from the target information indication by utilizing an obtaining way corresponding to the first type of target information indication way or by utilizing an obtaining way corresponding to the second type of target information indication way.

25. The method of claim 24, further comprising:
receiving first information,
wherein the first information is configured to indicate whether the UE has an ability to support the first type of target information indication way; or
the first information is configured to indicate whether the UE utilizes the first type of target information indication way to send the target information indication.

26. The method of claim 25, further comprising:
determining, based on the first information, the indication way of the target information indication.

27. The method of any of claims 24 to 26, wherein the first type of target information indication way represents an artificial intelligence (AI)-based channel state information indication way; and
the second type of target information indication way represents a non-AI-based channel state information indication way.

28. The method of claim 25, wherein the first information is carried by one of the followings:
capability report information, information comprised in a random access process, radio resource control (RRC) signaling and uplink control information (UCI).

29. The method of claim 28, wherein the information comprised in the random access process comprises one of the followings:
Message A in a two-step random access process;
Msg1 in a four-step random access process; and
Msg3 in the four-step random access process.

30. The method of any of claims 24 to 29, further comprising:
sending third information,
wherein the third information comprises at least one of the followings:
an indication of a way to send the target information indication;
whether the network device has an ability to support the first type of target information indication way;
capabilities that the network device has; and
configuration parameters used by the network device.

31. The method of claim 30, wherein the third information is carried by one of the followings:
broadcast information, RRC signaling, medium access control (MAC) control element (CE),
downlink control information (DCI) and information in a random access process.

32. The method of claim 31, wherein the information comprised in the random access process comprises one of the followings:
Message B in a two-step random access process;
Msg2 in a four-step random access process; and
Msg4 in the four-step random access process.

33. The method of any of claims 24 to 32, further comprising:
sending at least one set of parameter information, wherein the parameter information is neural network parameter information that can be used when the UE utilizes the first type of target information indication way.

34. The method of claim 33, wherein the at least one set of parameter information is carried by broadcast information, or by RRC signaling, or by random access response, or by MAC CE, or by DCI.

35. The method of claim 33, wherein when at least two sets of parameter information are sent, the method further comprises:
sending a first notification configured to notify the parameter information that is activated.

36. The method of claim 35, wherein the first notification is carried by broadcast information, or by RRC signaling, or by random access response, or by MAC CE, or by DCI.

37. The method of claim 33, further comprising:
receiving a second notification for activating at least a part of the plurality of sets of parameter information.

38. The method of claim 37, wherein the second notification is carried by random-access RRC signaling, or by random access request, or by MAC CE, or by UCI.

39. The method of any of claims 24 to 32, further comprising:
receiving at least one set of parameter information used by the UE, wherein the parameter information used by the UE is neural network parameter information that is used when the UE utilizes the first type of target information indication way.

40. The method of claim 39, wherein the at least one set of parameter information used by the UE is carried by RRC signaling, or by random access request, or by MAC CE, or by UCI.

41. The method of any of claims 24 to 40, wherein the target information is channel state information (CSI).

42. A user equipment (UE), comprising:
a first communication unit, for sending a target information indication,
wherein an indication way to indicate the target information indication is a first type of target information indication way or a second type of target information indication way.

43. The UE of claim 42, wherein the first communication unit sends first information,
wherein the first information is configured to indicate whether the UE has an ability to support the first type of target information indication way; or
the first information is configured to indicate whether the UE utilizes the first type of target information indication way to send the target information indication.

44. The UE of claim 42, wherein the first communication unit utilizes the first type of target information indication way to send the target information indication when the UE has an ability to support the first type of target information indication way; and
the first communication unit utilizes the second type of target information indication way to send the target information indication when the UE does not have the ability to support the first type of target information indication way.

45. The UE of any of claims 42 to 44, wherein the first type of target information indication way represents an artificial intelligence (AI)-based channel state information indication way; and
the second type of target information indication way represents a non-AI-based channel state information indication way.

46. The UE of claim 42, wherein the first information is carried by one of the following information: UE capability information, information comprised in a random access process, radio resource control (RRC) signaling and uplink control information (UCI).

47. The UE of claim 46, wherein the information comprised in the random access process comprises one of the followings:
Message A in a two-step random access process;
Msg1 in a four-step random access process; and
Msg3 in the four-step random access process.

48. The UE of any of claims 42, 43 and 45 to 47, wherein the first communication unit receives third information,
wherein the third information comprises at least one of the followings:
an indication of a way to send the target information indication;
whether a network side has an ability to support the first type of target information indication way;
capabilities that the network side has; and
configuration parameters used at the network side.

49. The UE of claim 48, wherein the third information is carried by one of the followings:
broadcast information, RRC signaling, medium access control (MAC) control element (CE),
downlink control information (DCI) and information in a random access process.

50. The UE of claim 49, wherein the information in the random access process comprises one of the followings:
Message B in a two-step random access process;
Msg2 in a four-step random access process; and
Msg4 in the four-step random access process.

51. The UE of claim 48, further comprising:
a first processing unit, for determining, based on the third information, a way to send the target information indication.

52. The UE of claim 51, wherein:
the first processing unit determines, based on a way indicated in the third information to send the target information indication, the way to send the target information indication.

53. The UE of claim 52, wherein:
the first processing unit determines to utilize the first type of target information indication way when the third information represents that a network side has an ability to support a first type of target information indication and the UE has an ability to support the first type of target information indication.

54. The UE of claim 52, wherein:
based on the capabilities of a network side comprised in the third information, the first processing unit determines whether the network side supports a first type of target information indication; and
the first processing unit determines to utilize the first type of target information indication way when determining that the network side supports and the UE has an ability to support the first type of target information indication.

55. The UE of claim 52, wherein:
based on configuration parameters of a network side comprised in the third information, the first processing unit determines whether the network side supports a first type of target information indication; and
the first processing unit determines to utilize the first type of target information indication way when determining that the network side supports and the UE has an ability to support the first type of target information indication.

56. The UE of any of claims 42 to 55, wherein:
the first communication unit receives at least one set of parameter information, wherein the parameter information is neural network parameter information that can be used when the UE utilizes the first type of target information indication way.

57. The UE of claim 56, wherein the at least one set of parameter information is carried by broadcast information, or by RRC signaling, or by random access response, or by MAC CE, or by DCI.

58. The UE of claim 56, wherein when at least two sets of parameter information are received, the first communication unit receives the first notification; and
the first processing unit determines, based on the first notification, the parameter information that is activated.

59. The UE of claim 58, wherein the first notification is carried by broadcast information, or by RRC signaling, or by random access response, or by MAC CE, or by DCI.

60. The UE of claim 56, wherein the first communication unit sends a second notification for activating at least a part of the plurality of sets of parameter information.

61. The UE of claim 60, wherein the second notification is carried by random-access RRC signaling, or by random access request, or by MAC CE, or by UCI.

62. The UE of any of claims 42 to 55, wherein the first communication unit
sends at least one set of parameter information used by the UE when the UE has an ability to support the first type of target information indication way, wherein the parameter information used by the UE is neural network parameter information that is used when the UE utilizes the first type of target information indication way.

63. The UE of claim 62, wherein the at least one set of parameter information used by the UE is carried by RRC signaling, or by random access request, or by MAC CE, or by UCI.

64. The UE of any of claims 42 to 63, wherein the target information is channel state information (CSI).

65. A network device, comprising:
a second communication unit, for receiving a target information indication, wherein an indication way to indicate the target information indication is a first type of target information indication way or a second type of target information indication way; and
a second processing unit, for obtaining target information from the target information indication by utilizing an obtaining way corresponding to the first type of target information indication way or by utilizing an obtaining way corresponding to the second type of target information indication way.

66. The network device of claim 65, wherein the second communication unit receives first information,
wherein the first information is configured to indicate whether the UE has an ability to support the first type of target information indication way; or
the first information is configured to indicate whether the UE utilizes the first type of target information indication way to send the target information indication.

67. The network device of claim 66, wherein the second communication unit
determines, based on the first information, the indication way of the target information indication.

68. The network device of any of claims 65 to 67, wherein the first type of target information indication way represents an artificial intelligence (AI)-based channel state information indication way; and
the second type of target information indication way represents a non-AI-based channel state information indication way.

69. The network device of claim 67, wherein the first information is carried by one of the followings: capability report information, information comprised in a random access process, radio resource control (RRC) signaling and uplink control information (UCI).

70. The network device of claim 69, wherein the information comprised in the random access process comprises one of the followings:
Message A in a two-step random access process;
Msg1 in a four-step random access process; and
Msg3 in the four-step random access process.

71. The network device of any of claims 65-70, wherein the second communication unit sends third information,
wherein the third information comprises at least one of the followings:
an indication of a way to send the target information indication;
whether the network device has an ability to support the first type of target information indication way;
capabilities that the network device has; and
configuration parameters used by the network device.

72. The network device of claim 71, wherein the third information is carried by one of the followings: broadcast information, RRC signaling, medium access control (MAC) control element (CE), downlink control information (DCI) and information in a random access process.

73. The network device of claim 72, wherein the information comprised in the random access process comprises one of the followings:
Message B in a two-step random access process;
Msg2 in a four-step random access process; and
Msg4 in the four-step random access process.

74. The network device of any of claims 65-73, wherein the second communication unit
sends at least one set of parameter information, wherein the parameter information is neural network parameter information that can be used when the UE utilizes the first type of target information indication way.

75. The network device of claim 74, wherein the at least one set of parameter information is carried by broadcast information, or by RRC signaling, or by random access response, or by MAC CE, or by DCI.

76. The network device of claim 74, wherein when at least two sets of parameter information are sent, the second communication unit sends a first notification configured to notify the parameter information that is activated.

77. The network device of claim 76, wherein the first notification is carried by broadcast information, or by RRC signaling, or by random access response, or by MAC CE, or by DCI.

78. The network device of claim 74, wherein the second communication unit receives a second notification for activating at least a part of the plurality of sets of parameter information.

79. The network device of claim 78, wherein the second notification is carried by random-access RRC signaling, or by random access request, or by MAC CE, or by UCI.

80. The network device of any of claims 65 to 73, wherein the second communication unit receives at least one set of parameter information used by the UE, wherein the parameter information used by the UE is neural network parameter information that is used when the UE utilizes the first type of target information indication way.

81. The network device of claim 80, wherein the at least one set of parameter information used by the UE is carried by RRC signaling, or by random access request, or by MAC CE, or by UCI.

82. The network device of any of claims 65 to 81, wherein the target information is channel state information (CSI).

83. A user equipment (UE), comprising a processor and a memory configured to store a computer program executable on the processor, wherein:
the memory is configured to store the computer program, and the processor is configured to call and run the computer program stored in the memory to execute the method of any of claims 1 to 23.

84. A network device, comprising a processor and a memory configured to store a computer program executable on the processor, wherein:
the memory is configured to store the computer program, and the processor is configured to call and run the computer program stored in the memory to execute the method of any of claims 24 to 41.

85. A chip, comprising a processor configured to call and run a computer program stored in a memory to enable a device with the chip installed to execute the method of any of claims 1 to 23.

86. A chip, comprising a processor configured to call and run a computer program stored in a memory to enable a device with the chip installed to execute the method of any of claims 24 to 41.

87. A computer readable storage medium, configured to store a computer program, which enables a computer to execute the method of any of claims 1 to 41.

88. A computer program product, comprising computer program instructions, which enable a computer to execute the method of any of claims 1 to 41.

89. A computer program, enabling a computer to execute the method of any of claims 1 to 41.
